# EUROPEAN PATENT APPLICATION

(11) **EP 1 071 029 A2**
(43) Date of publication of application: **24.01.2001**
(21) Application number: 00306213.0
(22) Date of filing: 21.07.2000
(51) Int. Cl.: G06F 17/60

(54) **Method and system for providing electronic mail services to mobile devices with efficient use of network bandwidth**

(30) Priority: 23.07.1999 US 145443 P; 06.06.2000 US 589047
(71) Applicant: Phone.Com Inc., Redwood City, CA 94063 (US)
(72) Inventor: Smethers, Paul A., Seattle, WA 98121 (US)
(74) Representative: Ablett, Graham Keith

(57) **Abstract**

The present invention relates to a method and mobile device (200) for interacting with a mail server to provide mail services through a wireless data communication network such that the user can locally perform certain electronic mail services when the network is unavailable. The device has a persistent memory (206) for storing a first predetermined portion of incoming electronic mail messages, which portion is substantially less than the entire incoming message, and a non-persistent memory (208) for storing none, some or all of a remaining portion of the incoming message. An electronic mail processor (226) controls the display of at least a part of the one or more of the electronic mail messages on a display device (228) and interacts with the mail server to receive the incoming electronic mail messages from the mail server and to transmit outgoing electronic mail messages to the mail server. Accordingly, when the network is needed, the bandwidth of the network is efficiently consumed such that burdens placed on the network and wait times imposed on users are both minimal.

## Description

### BACKGROUND OF THE INVENTION

### 1. Field of the Invention

The present invention relates to providing electronic mail services, and more particularly, to providing electronic mail services with reduced network reliance.

### 2. Description of the Related Art

Electronic mail (email) is a popular way to communicate with others. Electronic mail systems operate to send messages over a network. The network can include internal networks and external (e.g., public) networks. An example of an internal network is a corporate network, and an example of an external network is the Internet. Typically, the electronic mail systems are corporate wide systems that reside on an internal network but also permit coupling to an external network so that messages can be exchanged with other electronic mail systems.

Recently, Internet-based electronic mail systems have been developed and implemented to provide electronic mail services over the Internet. In such systems, there is no internal network because the electronic mail system resides on the Internet. The electronic mail system has a mail server that interacts with users' network browsers so that users are able to request electronic mail services which are performed by the mail server. Typically, the mail server is a Hyper Text Transfer Protocol (HTTP) server.

These Internet-based electronic mail systems have been implemented over wired networks as well as wireless networks. The availability of the network determines whether a client application (e.g., network browser) is in communication with the mail server. The client application operates on a local machine, whereas the mail server operates on a remote machine. In the case of wired networks, the local machine is, for example, a desktop computer. In the case of wireless networks, the local machine is a mobile device. For example, the mobile device can be a mobile telephone, a personal digital assistant (PDA) or a portable computer that has wireless access to the mail server.

One problem with the conventional electronic mail systems is that the operation of client applications are very much dependent on availability of their network. In other words, when the network is unavailable, the client applications can become "hung", thereby stopping further processing until a response from a remote server via the network is received. Even when the client applications are sophisticated enough not to "hang", the client applications would still be unable to perform the requested email related operations. The network can be a wired network or a wireless network. Unavailability of a wired network can be due to high congestion or server failure. Unavailability of a wireless network can result from a user of a mobile device (supporting the client application) exceeding the geographic range of coverage. Unavailability also effectively results from a wireless network having high latencies, sporadic connectivity, high congestion or server failure. Because of the dependency of the operation of client applications on the availability of networks, client applications often have to wait for resources from mail servers. These wait times are unacceptably long when the network is unavailable to the client applications. Even when the network is available, the client applications conventionally require substantial amounts of network bandwidth to provide the email services and this tends to burden the network and induce wait times faced by users.

Computers or mobile devices are often provided with cache memories that temporarily store previously requested and obtained resources from remote servers. A cache memory is helpful in reducing the dependency of the computers or mobile devices on network availability. However, the cache memory is only helpful when the newly requested resource happens to reside in the cache memory. Hence, if the newly requested resource was not previously requested, then the newly requested resource would not be stored in the cache memory. Also, even if the newly requested resource were at one point in time stored in the cache memory, a reclamation or clean-up algorithm could have removed it from the cache memory to provide space for newer requested resources. Still further, the cache memory has to be relatively large to store all the resources likely to be again requested. However, mobile devices (particularly hand-held mobile devices) need to keep cache memories relatively small due to power, cost and space limitations.

In the case of Internet-based electronic mail systems, a network browser operates on the computer or mobile device to enable access to and manipulation of their electronic mail residing on a mail server over the Internet. Since network browsers can be used to request electronic mail resources from remote mail servers over the network, network browsers are particularly sensitive to network unavailability (e.g., due to out of coverage, high latencies, or sporadic connectivity). Consequently, even when conventional cache memory is provided, it is common for network unavailability and significant bandwidth requirements of electronic mail systems to induce significant delays for the users of network browsers on computers or mobile devices.

Thus, there is a need for techniques to reduce delays faced by users seeking to utilize electronic mail services provided by a mail server across a network.

### SUMMARY OF THE INVENTION

Broadly speaking, the invention relates to improved techniques for providing electronic mail services to clients (i.e., client devices) across a network. A mail server and its clients communicate through the network. Although the mail server centrally manages the electronic mail services, the clients are able to themselves locally perform certain electronic mail services when the network is unavailable. At those times the network is needed, the bandwidth of the network is efficiently consumed such that burdens placed on the network and wait times imposed on users are both minimal. The invention is particularly well suited for low bandwidth networks, such as wireless networks, and for wireless devices with small memory capacity.

There are one or more aspects that may be associated with the invention. According to one aspect of the invention network traffic is eliminated for most standard email operations. The network is, however, needed for certain operations, such as downloading new mail or sending messages that were composed while unconnected to the network (offline). Hence, although some email operations require network availability to communicate with a mail server, basic email operations, such as reading, composing and deleting, do not require network availability. According to another aspect of the invention, client devices receive a list of electronic mail messages and a predetermined amount (e.g., first page) of each of the messages in the list of electronic mail messages. On request, remaining portions of the messages can be retrieved from the mail server if network connection is available.

The invention can be implemented in numerous ways, including as a method, a computer readable medium, an apparatus, and a system. Several embodiments of the invention are discussed below.

As a method for providing email services to a wireless device from a mail server via a wireless data communication network, one embodiment of the invention includes at least the acts of: receiving email messages destined for the wireless device; processing the email messages to produce one or more formatted pages for each of the email messages; and downloading a first of the one or more formatted pages for each of the email messages to the wireless device when the wireless data communication network is available to the wireless device.

As a method for viewing email messages on a wireless device, the email messages being supplied to the wireless device from a mail server via a wireless data network, one embodiment of the invention includes at least the acts of: receiving an email list and a first page of a plurality of email messages at the wireless device from the mail server via the wireless data network; displaying the email list for the email messages on the wireless device; receiving a selection of one of the email messages to be viewed; and displaying, in response to the selection, at least a portion of the first page of the selected one of the email messages.

As a computer readable medium including computer program code for viewing email messages on a mobile device, the email messages being supplied to the mobile device from a mail server via a data network, one embodiment of the invention includes at least: computer program code for receiving a first page of a plurality of email messages at the mobile device from the mail server via the data network; computer program code for receiving a selection of one of the email messages to be viewed; and computer program code for displaying, in response to the selection, at least a portion of the first page of the selected one of the email messages.

As a mobile device for interacting with a mail server to provide mail services through a wireless data communication network, one embodiment of the invention includes at least: a persistent memory store that stores a first predetermined portion of incoming electronic mail messages, the first predetermined portion being substantially less than the entire portion; a non-persistent memory store that stores none, some or all of a remaining portion of the incoming electronic mail messages; a display device that displays at least a part of one or more of the electronic mail messages; and an electronic mail processor that controls the display of at least a part of the one or more of the electronic mail messages on the display device, and interacts with the mail server to receive the incoming electronic mail messages from the mail server and to transmit outgoing electronic mail messages to the mail server.

As a method for transmitting computer instructions to a mobile device over a data link, the computer instructions when executed by the mobile device enable the mobile device to view email messages, one embodiment of the invention includes at least the acts of: transmitting, over the link, computer program code for receiving a first page of a plurality of email messages at the mobile device from a mail server via the data link, the first page being one of a plurality of pages associated with each of the plurality of email messages; transmitting, over the link, computer program code for receiving a selection of one of the email messages to be viewed; and transmitting, over the link, computer program code for displaying, in response to the selection, at least a portion of the first page of the selected one of the email messages.

The advantages of the invention are numerous. Several advantages that embodiments of the invention may include are as follows. One advantage of the invention is that electronic mail services can be performed at client devices (e.g., wireless devices) even when the network is unavailable. As a result, clients experience better responsiveness and less waiting. Another advantage of the invention is that network bandwidth is able to be efficiently used. Still another advantage of the invention is that electronic mail services can be provided on wireless devices having limited memory yet requiring minimal network bandwidth.

Other aspects and advantages of the invention will become apparent from the following detailed description, taken in conjunction with the accompanying drawings which illustrate, by way of example, the principles of the invention.

### BRIEF DESCRIPTION OF THE DRAWINGS

The present invention will be readily understood by the following detailed description in conjunction with the accompanying drawings, wherein like reference numerals designate like structural elements, and in which:
FIG. 1 is a block diagram of a wireless data communications system according to an embodiment of the invention;
FIG. 2 is a block diagram of a mobile device according to an embodiment of the invention;
FIG. 3 is a flow diagram of receive email processing according to one embodiment of the invention;
FIG. 4A is a diagram of a representative main menu screen according to one embodiment of the invention;
FIG. 4B is a diagram of a representative email menu screen according to one embodiment of the invention;
FIG. 4C is a diagram of a representative inbox screen according to one embodiment of the invention;
FIGs. 5A and 5B are flow diagrams of view processing according to one embodiment of the invention;
FIGs. 6A and 6B illustrate representative screen depictions associated with viewing email messages according to one embodiment of the invention;
FIG. 6C is a diagram of a representative screen that is presented in response to a "From" command according to one embodiment of the invention;
FIG. 7 is a flow diagram of send email processing according to one embodiment of the invention; and
FIG. 8 is a flow diagram of mail server processing according to one embodiment of the invention.

### DETAILED DESCRIPTION OF THE INVENTION

The invention relates to improved techniques for providing electronic mail services to clients (i.e., client devices) across a network. A mail server and its clients communicate through the network. Although the mail server centrally manages the electronic mail services, the clients are able to themselves locally perform certain electronic mail services when the network is unavailable. At those times the network is needed, the bandwidth of the network is efficiently consumed such that burdens placed on the network and wait times imposed on users are both minimal. The invention is particularly well suited for low bandwidth networks, such as wireless networks, and for wireless devices with small memory capacity.

Accordingly, clients seeking to perform electronic mail services no longer need endure significant delays when the network is unavailable or while waiting for data transfers over the network. The network can be at least temporarily unavailable for a variety of reasons, including: congestion, out of range, network failure, etc. The network can be wired or wireless.

There are one or more aspects that may be associated with the invention. According to one aspect of the invention network traffic is eliminated for most standard email operations. The network is, however, needed for certain operations, such as downloading new mail or sending messages that were composed while unconnected to the network (offline). Hence, although some email operations require network availability to communicate with a mail server, basic email operations, such as reading, composing and deleting, do not require network availability. According to another aspect of the invention, client devices receive a list of electronic mail messages and a predetermined amount (e.g., first page) of each of the messages in the list of electronic mail messages. On request, remaining portions of the messages can be retrieved from the mail server if network connection is available.

While the invention is useful for both wired and wireless networks, the invention is described below with reference to a wireless communication system since wireless networks more often suffer network unavailability. In a wireless communication system, a wireless network (wireless carrier network) generally supports connection of a plurality of mobile devices to a wired network. The mobile devices communicate with server machines on the wired network to request and receive various resources. The wired network can be of different types. One type of wired network is the Internet. The invention pertains to the facilitating of operation of mobile devices when the wireless or wired network is unavailable such that the mobile devices are unable to communicate with the server machines, such as a mail server.

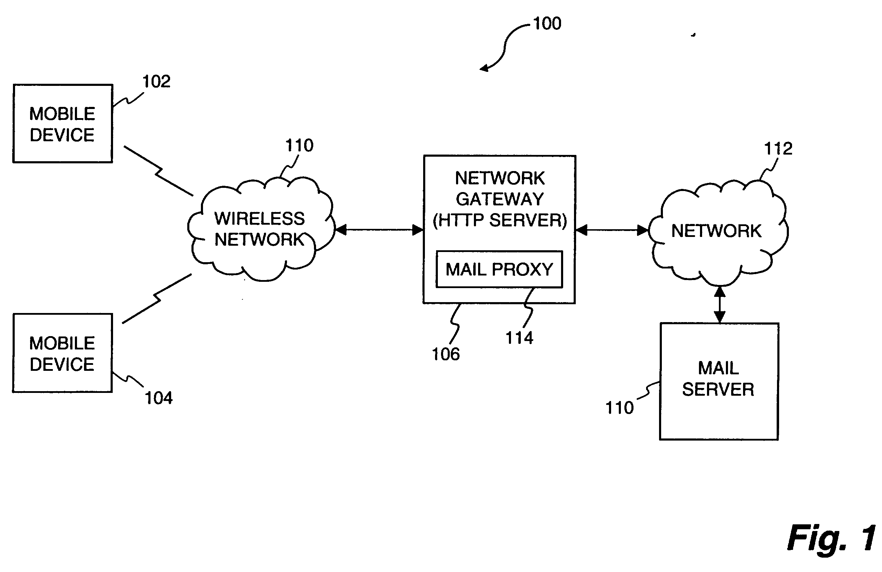

Embodiments of the invention are discussed below with reference to FIGs. 1 - 8. However, those skilled in the art will readily appreciate that the detailed description given herein with respect to these figures is for explanatory purposes as the invention extends beyond these limited embodiments.

FIG. 1 is a block diagram of a wireless data communications system 100 according to an embodiment of the invention. The wireless data communication system 100 includes mobile devices 102 and 104. Normally, the wireless data communication system 100 supports a large number of mobile devices, and thus the mobile devices 102 and 104 are representative of the mobile devices used. These mobile devices 102 and 104 can couple to a network gateway 106 through a wireless network 108. The network gateway 106 can also be referred to as a proxy server or wireless data server. The network gateway 106 is able to exchange information with a mail server 110. The network gateway 106 and the mail server 110 are interconnected through a network 112. The mail server 110 manages the storage and delivery of electronic mail messages to the appropriate location (e.g., the mobile devices 102 and 104). Typically, the network 112 is a wired network. As an example, the network 112 can be a local area network (LAN), a wired area network (WAN), the Internet, or some combination thereof. In one embodiment, the network 112 is the Internet and the network gateway 106 and the mail server 110 are HTTP servers.

According to the invention, the mobile devices 102 and 104 are able to perform many electronic mail functions even though the network is unavailable to the mobile devices. The mobile devices 102 and 104 are not dependent on the availability of network connectivity to the mail server 110 in order to provide electronic mail functions on the mobile devices 102 and 104.

The network gateway 106 can also include a mail proxy 114. The mail proxy 114 allows the mobile devices 102 and 104 to communicate with the mail server 110 with optimum efficiency. Given the limited storage capacity of mobile devices, typically only the first pages of email messages are downloaded and persistently stored to the mobile devices and then for off-line viewing (e.g., from an Inbox). If the users of the mobile devices desire to receive additional pages and/or attachments of the email messages, the mobile device can request such pages from the mail server 110 via the mail proxy 114, provided an on-line connection is available. However, if the additional pages or attachments have all ready been downloaded to non-persistent (e.g., cache storage) of the mobile device, then the request for such data from the mail server 110 (via the mail proxy 114) is not necessary. A limited number of these messages may be stored on the mobile device. The limited storage capacity of the mobile devices also limits the number of messages that can be stored in the mobile device. However, by sending only the first pages of the messages to the mobile device, more messages are able to be stored in the mobile device. As noted above, the first page (e.g., from, subject and initial body portion) is stored in persistent storage, while subsequent pages of the messages are stored in non-persistent storage. A garbage collection process can be used to cause the oldest messages to be removed from storage on the mobile device to make room for new messages. The user can also request that certain messages be saved or deleted.

When a new message arrives at the mail server 110, an alert notification can be sent to the mobile device. The mobile device can then request a download of the message or the mail proxy can initiate an automatic download. In either case, preferably only the first page of the email message is downloaded. The user is able to compose email messages while the mobile device is off-line. Then, the user can request that a message that has been composed be sent immediately to the mail server via the mail proxy or alternatively held in an Outbox for later sending of the message. After a message has been sent, the message is removed from the Outbox and placed in a Sent Box on the mobile device.

The mobile devices can take a variety of forms. Examples of mobile devices include mobile computing devices, cellular or mobile phones, portable computer devices, personal digital assistant (PDA) devices. Most mobile devices are also wireless devices. Wireless devices are computing or communication devices that communicate in a wireless manner with a network.

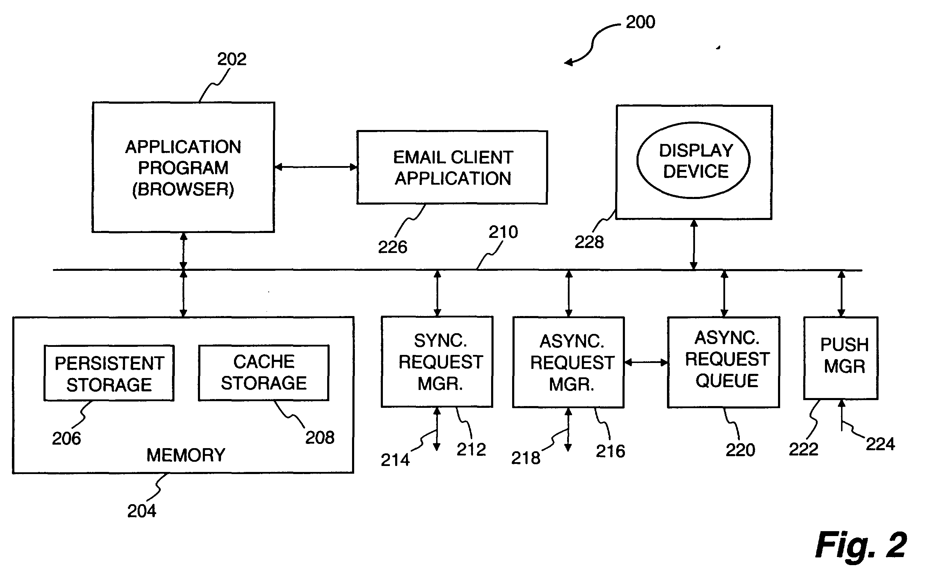

FIG. 2 is a block diagram of a mobile device 200 according to an embodiment of the invention. The mobile device 200 is, for example, suitable for use as the mobile device 102 or the mobile device 104 illustrated in FIG. 1. The mobile device 200 is particularly suited for wireless communications through a wireless network where connectivity is sporadic or high-latency conditions are present.

The mobile device 200 includes an application program that operates on the mobile device 200. In one embodiment, the application program 202 is a network browser. In one embodiment, the network browser is a micro-browser. A micro-browser is a network browser designed for a small screen interface such as with hand-held mobile devices. As an example, a micro-browser is produced by Phone.com, Inc. located at 800 Chesapeake Drive, Redwood City, CA 94063. The application program 202 interacts with a memory 204 that stores data for use by the application program 202. The memory 204 includes a persistent storage 206 and a cache storage 208. The persistent storage 206 is an area of the memory 204 that is protected from cache replacement or clean-up processing. The cache storage 208, on the other hand, is subject to cache replacement and cache-cleanup processing as is normal with cache type memory operations. Hence, the cache storage 208 is non-persistent storage. A communication link 210 (or interface) connects with the memory 204 to the application program 202. The memory 204 is also often of a limited size due to limitations on size and power for mobile devices, particularly hand-held mobile devices.

The mobile device 200 also includes a synchronous request manager 212 that couples to the communication link 210. The synchronous request manager 212 manages synchronous requests for resources by the mobile device 200 to the mail server 110 (or other remote servers) via a communication link 214. In response to the synchronous requests, the synchronous request manager 212 also receives resources from the mail server 110 (or other remote servers) via the communication link 214. An asynchronous request manager 216 is also coupled to the communication link 210. The asynchronous request manager 216 operates to manage asynchronous requests for resources from the mobile device 200 to the mail server 110 (or other remote servers) via a communication link 218. The asynchronous request manager is connected to an asynchronous request queue 220 that is also connected to the communication link 210. The asynchronous request queue 220 stores asynchronous requests that are to be transmitted by the asynchronous request manger 216 to the mail server 110 (or other remote servers) when the network is available to the mobile device 200. Also, when the network is available to the mobile device 200, a push manager 222 receives incoming resources over a communication link 224. The push manager 222 is coupled to the communication bus 210 and is thus able to store the incoming resources in the memory 204.

The mobile device 200 also includes an electronic mail client application 226. The electronic mail client application 226 is coupled with the application program 202 so that electronic mail functions (operations) can be performed on the mobile device 200. As is explained in more detail below, the electronic mail client application 226 is able to operate properly even when the network is unavailable. The mobile device 200 also includes a display device (or screen) 228 that is coupled to the communication link 210. Among other things, the display device 228 operates to display electronic mail information for a user of the mobile device 200.

The invention substantially eliminates or prevents network traffic for most standard email operations, and typically uses the network only when required to fulfill a request such as downloading new mail or sending messages composed while off-line. When a network browser is used at the mobile device, email operations can use standard URLs for calls to the mail server or to the email client application. The email client application operates by responding to client-side URL's for mail related operations. For example, in response to the client-side URL's, the email client application can return screens (e.g., cards) constructed from a local store where the email messages are kept. The network browser can be used to display the screens (e.g., cards) to the user. A user can compose and email message at anytime by replying, forwarding or composing a new email message. These composed messages can be sent immediately to the mail server or they can be stored in an Outbox until the messages are manually sent. In one embodiment, in both cases, the composed messages go through the Outbox even if only temporarily residing therein when immediate sending occurs. Messages composed on the mobile device can also be subsequently reviewed. Such messages can be provided in outbound view screens (e.g., cards) that can be viewed from either the Outbox or Sent Box and such screens (e.g., cards) are rendered locally in the mobile device.

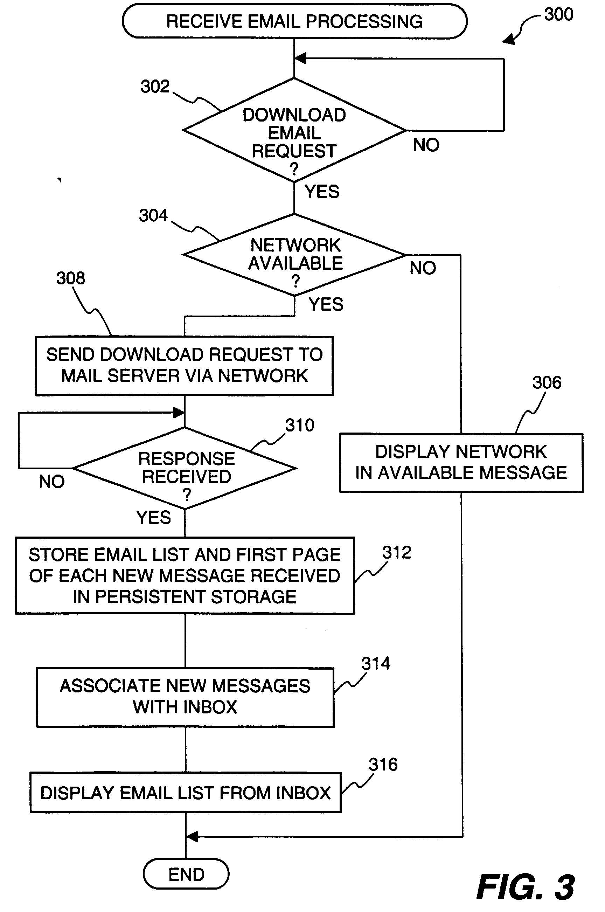

FIG. 3 is a flow diagram of receive email processing 300 according to one embodiment of the invention. The receive email processing 300 pertains to processing associated with a wireless device (mobile device) receiving electronic messages that are destined for the wireless device or its user. The wireless device is, for example, the mobile devices 102, 104 of FIG. 1 or the mobile device 200 of FIG. 2.

The receive email processing 300 begins with a decision 302 that determines whether a download email request has been issued. The download email request can be initiated in a number of ways. For example, the user can request to receive downloaded email messages by a menu selection, a soft key selection, or sending other messages immediately. When the decision 302 determines that a download email request has not yet been issued, the receive email processing 300 awaits such a request. In other words, the receive email processing 300 is effectively activated upon receiving a download email request.

In any case, once the decision 302 determines that a download email request has been issued, then a decision 304 determines whether the network is available. Here, the wireless device determines whether the wireless network utilized to couple the wireless device to the mail server is available. There are various reasons as to why the network could be unavailable, such as congestion, traffic or out of coverage (range). When the decision 304 determines that the network is not available, then a network unavailable message is displayed 306 on the wireless device. The network unavailable message informs the user of the wireless device that the email cannot be downloaded at this time because the network is unavailable. Following the operation 306, the receive email processing 300 is complete and ends.

On the other hand, when the decision 304 determines that the network is available, then a download request is sent 308 to the mail server via the network. Next, a decision 310 determines whether a response has been received. When the decision 310 determines that a response to the download request has not yet been received, then the receive email processing 300 awaits such a response. Once the decision 310 determines that a response has been received, an email list and first page of each new message received is stored 312 in persistent storage. The persistent storage is local storage to the wireless device that will remain after the wireless device is powered off and is not subject to cache clean-up processing. However, given the often limited memory capacity associated with the persistent storage of wireless devices, the number of messages that can be placed in the persistent storage is limited. In one embodiment, the persistent storage is used to hold 20 messages. The 20 messages can be the 20 most recent messages, the 20 oldest messages from the mail server, or any other 20 of the messages. It should be noted that only the email list and the first page of each of the messages are downloaded to the persistent storage. In one embodiment, the email list includes headers for each of the messages arranged in a list, and the first page of each of the messages includes from information, header information and an initial portion of the body of the message. The headers in the email list can be shortened to a limited size. Since the headers in the email list and the first pages may contain like data, the email list can retrieve the headers from the first pages. In one embodiment, the first page of the messages is limited to a predetermined size. In one example, the predetermined size is 1.5 K bytes which can include the text of the message (including header) and mark-up elements (links and soft keys).

Accordingly, the amount of storage permitted for each message is limited so that the limited memory capacity suffices and so that further network interaction will often not be required. In addition, the new messages are associated 314 with the inbox. The inbox is a location associated with an email service where incoming messages are placed. Next, an email list is displayed 316 from the inbox. Here, it is assumed that the user of the wireless device has requested to view the email list of incoming messages by requesting to view the inbox. Following the operation 316, the receive email processing 300 is complete and ends.

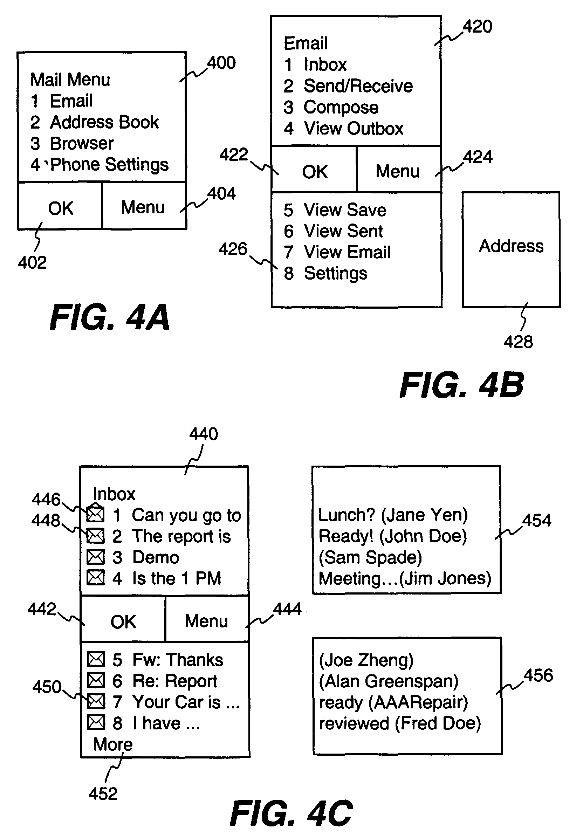

FIG. 4A is a diagram of a representative main menu screen 400 according to one embodiment of the invention. The main menu screen 400 allows, for example, a user of a wireless device to select one of four functions: Email, Address Book, Browser and Phone Settings. The main menu screen 400 also includes soft keys 402 and 404 that allow users to request certain actions with respect to the main menu screen.

When the user selects the email function, then an email menu screen 420 is displayed as illustrated in the representative email menu screen 420 illustrated in FIG. 4B. The email menu screen 420 displays an email menu that includes a variety of mail functions that can be selected by the user. These representative mail functions include: Inbox, Send/Receive, Compose, and View Outbox. The email menu screen 420 also provides soft keys 422 and 424. In the embodiment of the email menu illustrated in FIG. 4B, the email permits more mail functions than can be viewed in a single screen of the wireless device. Hence, an additional region 426 provides additional functions, namely, View Save, View Sent, View Email, and Settings. To view these additional functions, the additional region 426 can be brought into the email menu screen 420 by a vertical downward scrolling action. Additionally, FIG. 4B illustrates an additional region 428 that can be accessed in a horizontal scrolling action. For example, the option number #7, initially displays "View Email" on the screen, but such is actually a clipped version of the complete name of the function, namely, "View Email Address". Hence, the horizontal scrolling allows the user to view additional text associated with a particular line of the screen, provided such additional text is available.

FIG. 4C is a diagram of an inbox screen 440 according to one embodiment of the invention. In one embodiment, the inbox screen 440 is presented on the screen of the wireless device when the "Inbox" mail function is selected from the email menu screen 420 illustrated in FIG. 4B. The inbox screen 440 displays an email list. In this example, the email list has more than eight (8) messages. Each message in the email list can be identified by a number (e.g., 1, 2, 3, ...) and/or header information. Typically, the header information is at least a portion of subject information of the message. If no subject information is provided in a message, the header information can be blank or determined from other areas of the message. In one embodiment, the messages in the email list can be ordered based on the date each message was received at the mail server. The inbox screen 440 includes soft keys 442 and 444 to allow a user to make selections. For each of the messages of the email list, the inbox screen 440 includes a read message icon 446 or an unread message icon 448. An additional region 450 includes other messages associated with the email list that the user can scroll to by way of vertical scrolling. At the end of the additional area 450 there is a "More" command 452 that allows the user to request additional messages of the email list beyond those that have already been displayed. A first horizontal scroll region 454 provides additional text for certain of the messages that can be accessed by the user through horizontal scrolling. A second additional area 456 includes text associated with other messages within the additional region 450 that can be accessed by a vertical scrolling action.

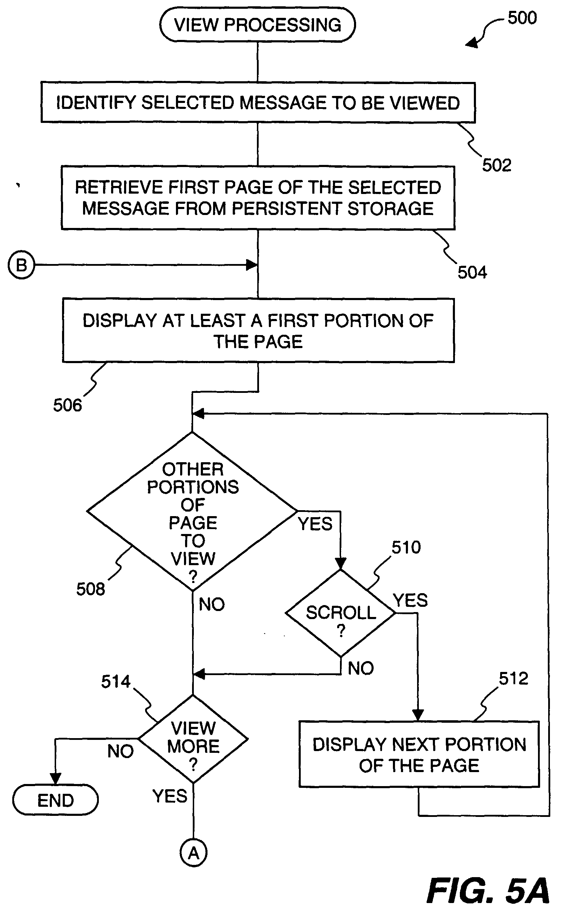

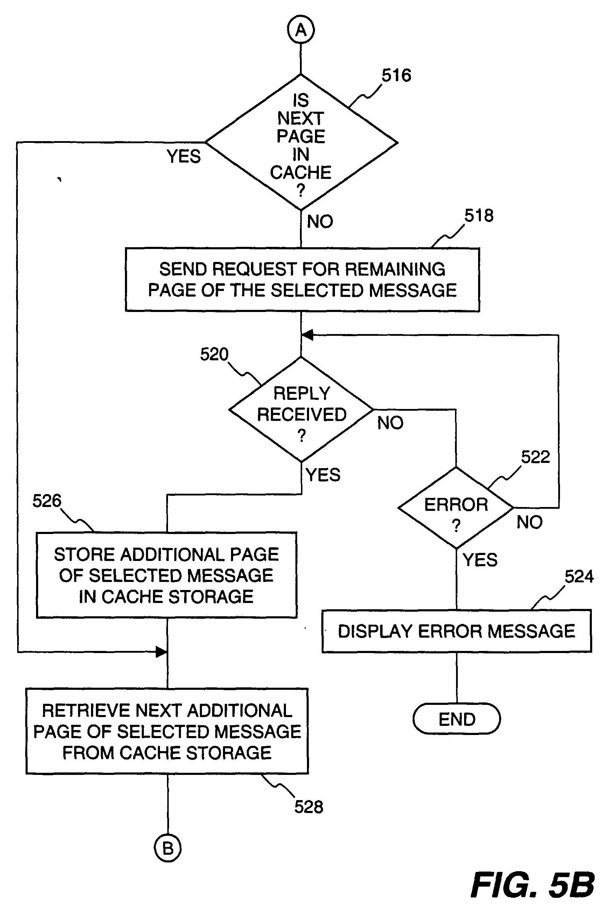

FIGs. 5A and 5B are flow diagrams of view processing 500 according to one embodiment of the invention. The view processing 500 can be initiated by the user of a wireless device by selecting a message from the inbox. The selection may involve a key (or soft key) selection on the wireless device.

Initially, the view processing 500 identifies 502 a selected message to be viewed. For example, a message can be selected from an email list such as shown in FIG. 4C. Then, a first page of the selected message is retrieved 504 from the persistent storage. In this embodiment, the persistent storage stores a header and a first page for each message.

Next, at least a first portion of the page is displayed 506. Initially, the page pertains to the first page but as noted below other pages can be subsequently displayed. Here, the screens associated with the wireless device will typically only display a limited number of lines that is less than the number of lines associated with the complete page. Hence, only a first portion of the page is initially able to be displayed such as it is viewable on the screen. Typically, the first page includes the header information (e.g., From and Subject fields) as well as at least an initial portion of the message body.

A decision 508 then determines whether there are other portions of the page to be viewed. When the page is larger than the first portion, then the page has other portions. When a decision 508 determines that there are other portions of the page to view, then a decision 510 determines whether a scroll operation has been requested. Typically, the scroll operation would be requested by the user of the wireless device. When the decision 510 determines that a scroll operation has been requested, then a next portion of the page is displayed 512. Here, typically, the next portion is associated with a vertical scrolling action; however, horizontal scrolling action could also be utilized. After the next portion of the page is displayed, the view processing 500 returns to repeat the decision 508 and subsequent blocks.

Alternatively, when the decision 508 determines that there are no other portions of the page to view, or when the decision 510 determines that a scroll operation has not been requested, then a decision 514 determines whether the user desires to view more of the selected message. In one embodiment, the ability to request to view more of the selected message is only made available to the user when there is one or more pages available for the selected message. Since the persistent storage only stores the first page of the selected message, when there are more pages and the user desires to view them, network connectivity is required to retrieve the one or more other pages from the mail server. In this regard, when the decision 514 determines that no more pages for the selected message are to be viewed, then the view processing 500 is complete and ends because the selected message has been fully viewed.

On the other hand, when the decision 514 determines that there are more pages to be viewed (and that the user desires to view them), a decision 516 determines whether the next page is in the cache storage. When the decision 516 determines that the next page is not in the cache storage, then a request for remaining page(s) of the selected message is sent 518. Here, depending upon implementation, the request for remaining pages can request the next remaining page, the next several pages, or all the remaining pages. After the request has been sent 518, the view processing 500 waits for the mail server to return the remaining page(s). Here, a decision 520 determines whether a reply has been received. When the decision 520 determines that a reply has not yet been received, then a decision 522 determines whether an error condition has resulted. When the decision 522 determines that an error condition has resulted, then an error message is displayed 524. After the error message is displayed 524, the view processing 500 is complete and ends, and the unavailability of the network prevents any additional pages associated with the selected message from being displayed. On the other hand, when the decision 522 determines that there are no error conditions, then the view processing 500 returns to repeat the decision 520.

Once the decision 520 determines that a reply has been received, then the additional page(s) of the selected message are stored 526 in cache storage. Here, the cache storage is also referred to as non-persistent storage. Typically, the cache storage (or non-persistent storage) is maintained after the wireless device loses connectivity with the wireless network. Next, a next additional page of the selected message is retrieved 528 from the cache storage. Thereafter, the view processing 500 returns to repeat the operation 506 and subsequent operations so that the additional page can be viewed by the user.

Alternatively, when the decision 516 determines that the next page is in the cache storage, the view processing 500 can retrieve 518 the next additional page of the selected message from the cache storage. In this case, the operations 518 ― 526 are effectively bypassed.

In the view processing 500 discussed above, the selected message can have one or more pages depending on the length of the selected message. Many times the messages are short enough to be viewed with only a single page (first page). In such cases, all the necessary content for the selected message is stored in the persistent storage and thus is immediately available regardless of network availability. On the other hand, with messages that are larger and thus require more than one page to include all the necessary content, then the one or more additional pages beyond the first page would have to be retrieved from the mail server over the network (assuming the user desired to view them). Thus, in such cases, the additional pages would be obtainable only when the network is available. Hence, the invention provides for persistent storage of at least a portion of the email messages so that the wireless device can operate without network connectivity most of the time, and then in those limited situations where network connectivity is needed, additional data can be exchanged with the mail server (if network is available).

In one embodiment, the pages of the email messages are displayed through use of an application program. For example, the application can be a browser program that displays the pages of the email messages. In such a case, the pages of the email messages can have a mark-up language format. In one particular embodiment, the pages are provided to the wireless device as a card having a format understood by the browser program. In one embodiment, the mail server can generate the card(s) for use by the wireless devices. In another embodiment, the wireless device can generate the card(s). Cards are described in more detail in U.S. Patent 5,809,415 to Rossmann et al., which is hereby incorporated by reference.

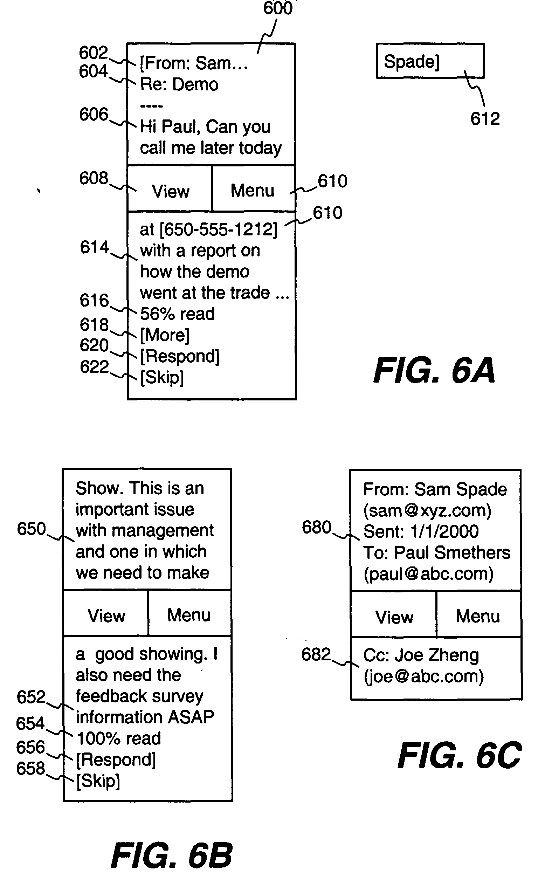

FIGs. 6A and 6B illustrate representative screen depictions associated with viewing email messages on a display of the wireless device. FIG. 6A illustrates a screen 600 that includes a sender line 602 and a subject line 604. In addition, the screen 600 displays a body 606 of the message. However, given the limited size of the display of the wireless device, initially only a first portion of a first page is able to be viewed. The screen 600 also includes soft keys 608 and 610 to allow user interaction. A horizontal scroll area 612 is also available to see additional text associated with the sender line 602. A remaining portion of the first page is provided in a vertical scroll area 614. The user of the wireless device can read the remaining portion of the first page of the message provided in the vertical scroll area 614 by a vertical scrolling downward action. In addition, the end of the first page can include a percentage read indicator 616, an embedded "More" command, an embedded "Response" command 620, and an embedded "Skip" command 622. Still further, the body 606 of the message can also include other embedded commands, such as an embedded telephone number 624. When any of the embedded commands are selected by the user, the embedded commands can be activated. For example, when the embedded telephone number 624 is selected, a call to the telephone number can be initiated. When the Skip command 622 is selected, the current message can be skipped and the next message be displayed in a like manner. The Respond command 620 allows the user to initiate a response to the message being viewed. The More command 618 when selected, operates to request a next page of the message for display on the screen.

FIG. 6B illustrates a next page associated with the message. As shown in FIG. 6, screen 650 presents the next page for the message reference in FIG. 6A. The screen 650 only displays an initial portion of the next page of the message given the limited size of the display, and displays a vertical scroll area 652 includes the balance of the page. Here, the next page represents a second page. A percentage read indicator 654 now indicates that the entire message (i.e., 100%) has been displayed within the first and second pages. A Respond command 656 allows the user to initiate a response, and a Skip command allows a user to skip to the next message.

FIG. 6C is a diagram of a screen 680 that is presented to a user when the user selects an embedded command such as a "From" command embedded (or header link) in the sender line 602 illustrated in FIG. 6A. The screen 680 presents the user with detailed information about the sender of the message (e.g., name and email address), when the message was sent, and to whom the message was sent (e.g., name and email address). A vertical scroll area 682 of the send page contains additional information such as to whom courtesy copies were sent. In one embodiment, the information for the screen 680 is not stored in persistent storage and thus require network availability to retrieve the information needed for the screen 680.

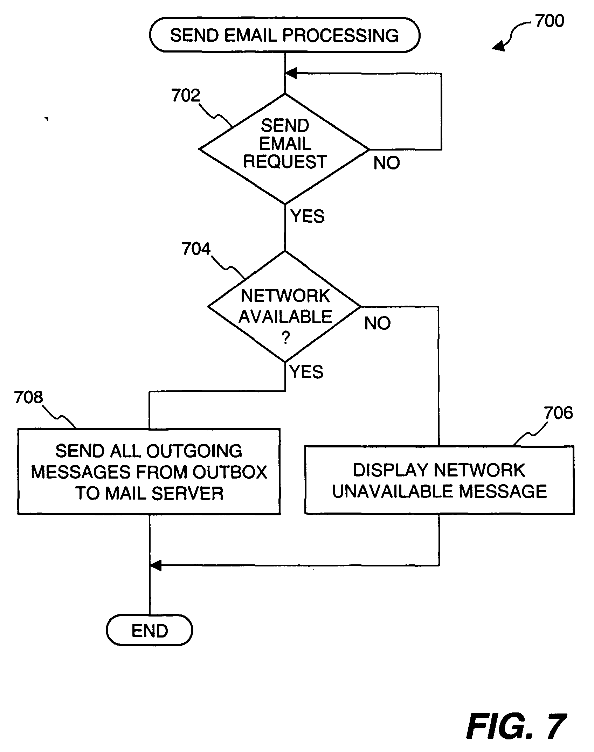

FIG. 7 is a flow diagram of send email processing 700 according to one embodiment of the invention. The send email processing 700 is, for example, initiated by the user selection of a "Send" command following the composing of a message or from a soft key associated with a send/receive screen.

The send email processing 700 begins with a decision 702 that determines whether a send email request has been issued. When the decision 702 determines that a send email request has not yet been issued, then the send email processing 700 awaits such a request. In effect, the send email processing 700 is invoked when a send email request 702 has been issued. In any case, once the decision 702 determines that a send email request has been issued, then a decision 704 determines whether the network is available. When the decision 704 determines that the network is not available, then a network unavailable message is displayed 706. Here, the network unavailable message can be displayed 706 on the screen associated with the wireless device to notify the user of the unavailability of the network. On the other hand, when the decision 704 determines that the network is available, then all outgoing messages are sent 708 from the outbox to the mail server. Hence, any outgoing message just created together with any outgoing messages waiting in the outbox would be sent or transferred to the mail server. Following operations 706 or 708, the send email processing 700 is complete and ends.

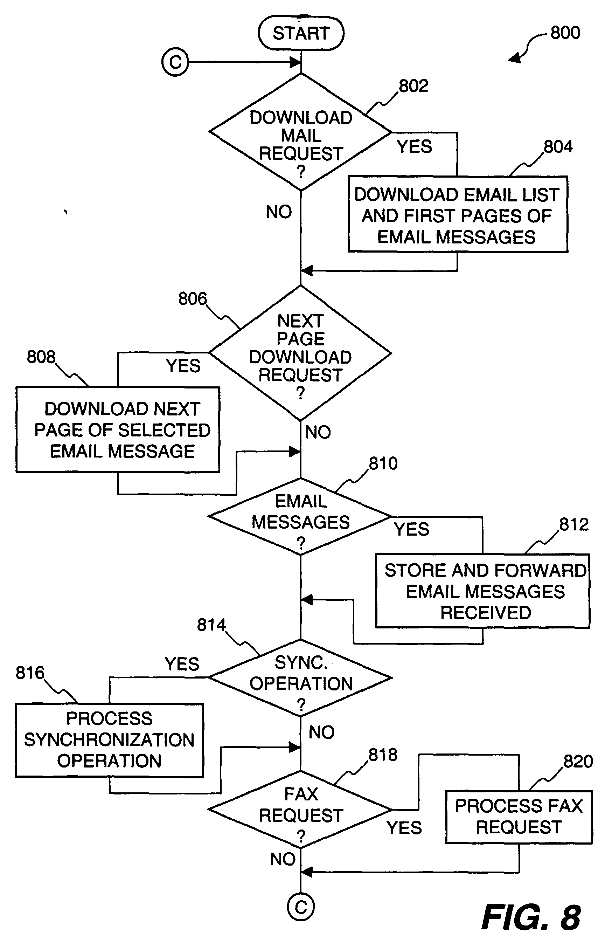

FIG. 8 is a flow diagram of mail server processing 800 according to one embodiment of the invention. The mail server processing 800 is, for example, performed by a mail server, such as the mail server 110 illustrated in FIG. 1.

The mail server processing 800 begins with a decision 802 that determines whether a download mail request has been received. When the decision 802 determines that a download mail request has been received, then an email list and the first pages of email messages are downloaded 804 to the wireless device. The email list can, among other things, can include limited size headers for the email messages. The mail server can produce the first pages of the email messages from the email messages. In one embodiment, the mail server formats the email messages into one or more pages suitable for display by mobile devices (wireless devices). As an example, the pages can be formatted to a limited size and be in a markup language (e.g., Wireless Markup Language (WML) or Handheld Device Mark-up Language (HDML)) that is displayable by browser application operable on mobile devices.

Following the operation 804, or following the decision 802 when a download mail request is not received, a decision 806 determines whether a next page download request has been received. When the decision 806 determines that a next page download request has been received, then the next page of the selected email message is downloaded 808. Typically, a next page is requested by viewing a prior page of the selected email message. In one embodiment, the prior page can include an embedded command or link that sends the download mail request to the mail server.

Following the operation 808, or following the decision 806 when it is determined that a next page download request has not been received, then a decision 810 determines whether one or more e-mail messages have been received at the mail server from a mobile device. When the decision 810 determines that one or more email messages have been received at the mail server, then the email messages that have been received are stored and forwarded 812. The email messages are stored at the mail server which provides mail storage that backs-up and is synchronized with mail storage on the mobile devices. The email messages being received are also forwarded over one or more networks to the addressees of the email messages.

Following the operation 812, as well as following the decision 810 when email messages have not been received, a decision 814 determines whether a synchronization operation is to be performed. When the decision 814 determines that a synchronization operation should be performed, then the synchronization operation is processed 816. Here, synchronization operations serves to update the back-up mail store with changes/operations that have occurred on mobile devices since the mobile device and the mail server last communicated/synchronized over the network. For example, this could include marking messages as read, deleting of messages, etc. In one embodiment, when the send/receive operation is requested, several things occur to insure proper synchronization, namely: any messages in the Outbox are sent to the mail server; the mail server is notified of those items deleted from the mobile device; and any new email messages are downloaded. For each message being downloaded the following data is received: from name, from e-mail address, subject, partial header line (subject truncated, no e-mail address), and message body (limited number of bytes). The mail server sends the body in a pre-processed state to the mail proxy so that it supports displaying on the mobile device.

Following the operation 816, as well as following the decision 814 when the synchronization operation is not requested, a decision 818 determines whether a fax request has been received. When the decision 818 determines that a fax request has been received, then the fax request can be processed 820. Here, the fax request can identify a fax number to which the fax is to be directed. Hence, instead of receiving the facsimile at the mobile device which has limited memory capacity and display ability, the facsimile can be directed by the mail server to the identified fax number. As a result, the facsimile is advantageously never delivered to the mobile device.

Following operation 820, as well as following the decision 818 when a fax request is not received, the mail server processing 800 returns to repeat the decision 802 in subsequent blocks so that mail server processing is constantly available.

More generally, the embedded commands can be considered dynamic elements. Examples of dynamic elements are embedded phone numbers, embedded EZreplies, embedded URL's, embedded email addresses, and downloading of attachments. By selecting an embedded phone number, a phone call can be initiated without requiring network coverage (other than voice coverage). Phone number recognition can be determined by a carrier with a configuration file. An embedded EZreply can be selected to compose a reply message with the "To" field filled in with the sender's email address, and text inserted into the body, thereby allowing for replies to email messages without requiring the user to type on the device (which is difficult on some devices like phones). Embedded URL's can appear in an email message and work as links that launch the network browser to go to a particular web site. Embedded email addresses can appear in an email message and assist in composing an email message to that address without requiring network coverage and with the "To" field filled in with the appropriate address. An attachment can appear where ever they appear in email message. For example, they can appear as embedded items. When selected, the attachment can be downloaded if the mobile device recognizes the type of attachment. For example, only attachment that match MIME types that the mobile device reports that it accepts will be turned into attachments for downloading.

Typically, it is very difficult to update or upgrade a client application on a wireless device. Email is a complicated client application that often requires updating to support variations in how to process messages from new external email clients. For example, when the new Web email clients like HotMail and Yahoo Mail became popular, minor updates were required to other email clients to handle small nuances in how they formatted email for delivery, and how they encoded different character sets and language information. These types of updates are not possible on most wireless devices, but can be done by a mail proxy, where updates and upgrades are easy. Additionally, new features can be added at the proxy server without requiring updates to client devices.

The advantages of the invention are numerous. Several advantages that embodiments of the invention may include are as follows. One advantage of the invention is that electronic mail services can be performed at client devices (e.g., wireless devices) even when the network is unavailable. As a result, clients experience better responsiveness and less waiting. Another advantage of the invention is that network bandwidth is able to be efficiently used. Still another advantage of the invention is that electronic mail services can be provided on wireless devices having limited memory yet requiring minimal network bandwidth. Yet another advantage is that electronic mail services can operate in networks with limited packet sizes without requiring complex fragmentation and reconstruction of large email messages. Another advantage of the invention is that unneeded or rarely used information is not transmitted to the client device or required to be stored in the client device until requested by a user. Examples of rarely used information includes such items as the list of recipients of an email message (i.e., the "To" and "Cc" fields), attachments, and pages after the first page of the email message.

The many features and advantages of the present invention are apparent from the written description, and thus, it is intended by the appended claims to cover all such features and advantages of the invention. Further, since numerous modifications and changes will readily occur to those skilled in the art, it is not desired to limit the invention to the exact construction and operation as illustrated and described. Hence, all suitable modifications and equivalents may be resorted to as falling within the scope of the invention.

## Claims

1. A method for providing email services to a wireless device from a mail server via a wireless data communication network, said method comprising:-
receiving email messages destined for the wireless device;
processing the email messages to produce a plurality of formatted pages for each of the email messages; and
uploading a first of the formatted pages for each of the email messages to the wireless device when the wireless data communication network is available to the wireless device.

2. A method as recited in claim 1 wherein the wireless device includes a persistent storage; and
wherein said downloading is from the mail server to the wireless device, and wherein said downloading causes the first of the formatted pages for each of the email messages to be stored to the persistent memory.

3. A method as recited in claim 2 wherein said method further comprises:-
further downloading one or more of the other of the formatted pages besides the first of the formatted pages when requested by the wireless device.

4. A method as recited in claim 3 wherein the wireless device includes a non-persistent storage, and
wherein said further downloading causes one or more of the other of the formatted pages besides the first of the formatted pages for at least one of the email messages to be stored to the non-persistent storage when the wireless date communication network is available to the wireless device.

5. A method for viewing email messages on a wireless device, the email messages being supplied to the wireless device from a mail server via a wireless data network, said method comprising:-
(a) receiving an email list and a first page of a plurality of email messages at the wireless device from the mail server via the wireless data network;
(b) displaying the email list for the email messages on the wireless device;
(c) receiving a selection of one of the email messages to be viewed; and
(d) displaying, in response to the selection, at least a portion of the first page of the selected one of the email messages.

6. A method as recited in claim 5 wherein the wireless device includes a persistent storage, and
wherein said method further comprises storing, prior to said displaying step (b), the email list and the first page of the email messages being received by said receiving step (a) into the persistent storage.

7. A method as recited in claim 5 or 6 wherein said method further comprises:-
(e) receiving a page request for another page of the selected one of the email messages;
(f) requesting the another page of the selected one of the email messages from the network server via the wireless data network;
(g) receiving the another page of the selected one of the email messages from the network server via the wireless data network; and
(h) displaying the another page on the wireless device in satisfaction of the page request when the wireless data network is available for said requesting step (f) and said receiving step (g).

8. A method as recited in claim 5 or 6 wherein the wireless device includes a non-persistent storage, and
wherein said method further comprises:-
(e) receiving a page request for another page of the selected one of the email messages;
(f) determining whether the another page of the selected one of the email messages is stored in the non-persistent storage;
(g) retrieving the another page of the selected one of the email messages from the non-persistent storage when said determining (f) determines that the another page of the selected one of the email messages is stored in the non-persistent storage;
(h) retrieving the another page of the selected one of the email messages from the network server via the wireless data network when said determining (f) determines that the another page of the selected one of the email messages is not stored in the non-persistent storage; and
(i) displaying the another page that has been retrieved on the wireless device.

9. A computer readable medium including computer program code for viewing email messages on a mobile device, the email messages being supplied to the mobile device from a mail server via a data network, said computer readable medium comprising:-
computer program code for receiving a first page of a plurality of email messages at the mobile device from the mail server via the data network, the first page being one of a plurality of pages associated with each of the plurality of email messages;
computer program code for receiving a selection of one of the email messages to be viewed; and
computer program code for displaying, in response to the selection, at least a portion of the first page of the selected one of the email messages.

10. A mobile device for interacting with a mail server to provide mail services through a wireless data communication network, said mobile device comprising:-
a persistent memory for storing a first predetermined portion of incoming electronic mail messages, the first predetermined portion being substantially less than the entire portion;
a non-persistent memory for storing none, some or all of a remaining portion of the incoming electronic mail messages;
a display device that displays at least a part of one or more of the electronic mail messages; and
an electronic mail processor that controls the display of at least a part of the one or more of the electronic mail messages on said display device, and that interacts with the mail server to receive the incoming electronic mail messages from the mail server and to transmit outgoing electronic mail messages to the mail server.
